# EUROPÄISCHE PATENTSCHRIFT

(11) **EP 1 027 653 B1**
(45) Veröffentlichungstag und Bekanntmachung des Hinweises auf die Patenterteilung: **15.09.2004**
(21) Anmeldenummer: 98966918.9
(22) Anmeldetag: 31.12.1998
(51) Int. Cl.: G06F 12/02

(54) **ZUGRIFFSSTEUERUNG EINES SPEICHERS BESCHRÄNKTER LÖSCHHÄUFIGKEIT**
ACCESS CONTROL FOR A MEMORY HAVING A LIMITED ERASURE FREQUENCY
COMMANDE D'ACCES D'UNE MEMOIRE A FREQUENCE D'EFFACEMENT LIMITEE

(30) Priorität: 04.09.1998 DE 19840389
(43) Veröffentlichungstag der Anmeldung: 16.08.2000
(73) Patentinhaber: Hyperstone AG, 78467 Konstanz (DE)
(72) Erfinder: Müller, Otto, Dr., 78464 Konstanz (DE)
(74) Vertreter: Hanewinkel, Lorenz, Dipl.-Phys.
(86) Internationale Anmeldenummer: PCT/EP1998/008516
(87) Internationale Veröffentlichungsnummer: WO 2000/014641

(56) Entgegenhaltungen:
- WO-A-95/10083

## Beschreibung

Die Erfindung betrifft ein Verfahren zur Zugriffssteuerung in einem Computer eines blockweise beschränkt oft löschbaren Speichers, der einem Nutzerzugriff verfügbare Nutzspeicherblöcke enthält, mittels einer Adreßtransformation.

Es ist bekannt, daß Speicher mit beschränkter Löschhäufigkeit wegen der gewöhnlich recht unterschiedlichen Nutzung einzelner Speicherabschnitte zur besseren Ausnutzung ihrer beschränkten Nutzungshäufigkeit in einzeln löschbare Speicherblöcke aufgeteilt sind, die mittels einer Adreßtransformation adressenmäßig angesteuert werden, wobei zu Beginn der Speichernutzung eine Anzahl Reserveblöcke von einer Adressierung ausgenommen werden, die jeweils erst wenn einer der bisher benutzten Blöcke völlig abgenutzt und unbrauchbar ist nach und nach durch eine ersatzweise Adreßzuordnung in Betrieb genommen werden. Dieses Verfahren schränkt also von vornherein die jeweils verfügbare Blockzahl ein und hinterläßt nach dem Aufbrauchen der Reserveblöcke eine große Zahl mehr oder weniger abgenutzte, also nicht voll genutzte, Blöcke übrig. Auch ist die Prüfung, ob eine bestimmte Adresse durch eine andere des Reservebereichs zu ersetzen ist, mit zunehmender Anzahl ausgefallener Blöcke aufwendiger.

Weiterhin ist es bekannt, die Schreibzeit und/oder die Löschzeit dem jeweiligen Alterungszustand des Speichers anzupassen.

WO 95 10083 A (CIRRUS LOGIC INC) 13. April 1995 beschreibt ein Verfahren zur Zugriffssteuerung in einem Computer eines blockweise beschränkt oft löschbaren Speichers, der einem Nutzerzugriff verfügbare Nutzspeicherblöcke enthält, jedem Nutzspeicherblock ein Informationsblock zugeordnet ist, wobei der Informationsblock einen Löschzählerspeicher und eine der physischen Adresse, des Nutzspeicherblocks die dem Informationsblock zugeordnet ist, zugeordnete logische Adresse beinhaltet, wobei jedesmal eine Information, die in einem Nutzspeicherblock gespeichert ist, geändert wird, diese geänderte Information nicht überschrieben wird sondern in einen neuen freien Nutzspeicherblock geschrieben wird und wobei neue Information in einen freien gelöschten Nutzspeicherblock gespeichert wird.

Es ist Aufgabe der Erfindung, ein Verfahren zu offenbaren, bei dem keine Reservehaltung von Blöcken erfolgt und eine fast restlose, gleichmäßig Ausnutzung der Löschmöglichkeiten der Blöcke erfolgt.

Die Lösung besteht darin,daß die Adreßtransformation über eine Zeigertabelle erfolgt und jedem Adreßzeiger zugeordnet eine Löschnutzklasse tabellarisch gehalten wird, die jeweils bei Erreichen eines vorgegebenen Löschzustandskriteriums erhöht wird, wonach in der Zeigertabelle die weiteren Löschnutzklassen-Eintragungen nach der niedrigsten Löschnutzklasse mit einem Mindestabstand zur aktuellen Löschnutzklasse durchsucht werden, und wenn eine solche Löschnutzklasse gefunden wird, der zugehörige Adreßzeiger und die Löschnutzklasse mit den in der Ausgangszeigerposition vertauscht werden und die jeweils diesen Adreßzeigern zugehörigen Nutzspeicher-Blockinhalte ebenfalls getauscht werden.

Vorteilhafte Ausgestaltungen sind in den Unteransprüchen angegeben.

Da alle zu Beginn aufgrund von Fertigungsfehlern schadhaften Speicherblöcke in der Adreßtabelle nicht belegt werden, werden durch das neuartige Verfahren praktisch alle brauchbaren Speicherblöcke bis nahe an die Grenze der maximalen Löschhäufigkeit ausgenutzt; das Lesen ist praktisch unbegrenzt möglich; vor dem Schreiben eines neuen Inhalts muß gelöscht werden. Jeweils lange bevor ein Speicherblock ans Ende seiner Nutzbarkeit kommt, wird er mit einer löschmäßig seltener genutzten Adresse korreliert und entsprechend ein noch wesentlich weniger oft gelöschter Block mit der bisher höher frequentierten Adresse korreliert. Auf diese Weise gibt es praktisch nie einen Ausfall aufgrund einer Überbeanspruchung und die Systemzuverlässigkeit ist erheblich gesteigert. Anfangsausfallblöcke gibt es gewöhnlich zwischen 0 - 2% und die zulässige Löschzyklushäufigkeit liegt beispielsweise bei 1 Million. Die indirekte Adressierung wird also zum einen genutzt, die Anfangsausfallblöcke vom Gebrauch auszuschließen und zusätzlich um eine fast restlose Erschöpfung der Lebensdauerkapazität der funktionstüchtigen Blöcke sicherzustellen.

Um die Abnutzung der Blöcke durch die Löschvorgänge zu vergleichmäßigen, wird mit einem Zugriffsprogramm gearbeitet, das die Abnutzungsüberwachung der einzelnen Blöcke und die Umadressierung und die Verwaltung und Sicherung der Adressierungstabellen sowohl beim Hochlaufen des Computers als auch bei jedem Löschvorgang vornimmt.

Gemäß verschiedener Löschzustandkriterien, die einzeln oder gemeinsam genutzt werden können, erfolgt die jeweilige aktuelle Eintragung der Löschnutzklasse eines zuvor gelöschten Nutzspeicherblockes.

Als ein erstes Löschzustandskriterium dient eine Modulozählung aller Löschvorgänge des jeweiigen Nutzspeicherblockes, wozu in diesem mindestens ein Modulozähler geführt wird und bei jedem Löschvorgang incrementiert wird und bei jedem Modulodurchlauf zur einer Incrementierung der Löschnutzklassen-Eintragung genutzt wird.

Als ein weiteres Löschzustandskriterium dient die jeweils erforderliche Schreibzeit und/oder Löschzeit. Diese wird/werden entweder jeweils dann erhöht, wenn eine nachherige Überprüfung ergab, daß das Schreiben bzw. Löschen nicht vollständig erfolgte, oder nach einem anderen systemabhängigen Alterungsschema speicherintern bestimmt.

Je höher die Schreib- und/oder Löschzeit ist, um so höher wird die Löschnutzklassen-Eintragung vorgenommen. Bei einer speicherinternen Schreib- bzw. Löschzeiterzeugung, wird die Zeitdauer jeweils in einem Zeittaktzählter ermittelt, dessen Endstand dann jeweils als ein Löschzustandskriterium genutzt wird.

Darüberhinaus werden solche erkennbaren Abnutzungserscheinungen berücksichtigt, die zu einem durch Redundanz restaurierbaren Datenlesefehler geführt haben, indem solchen Blöcken bei jedem restaurierbaren Fehlerfall eine erhöhte Degradation zugemessen wird.

Die Haltung der Adreß- und Abnutzungsdaten erfolgt im Speicher bzw. im Speicherblock selbst, so daß letztere über ihr ganzes Leben mit der Abnutzungshistorie verbunden sind und nicht bei einem Speicheraustausch z.B. von einem Computer zum anderen verlorengehen oder dekorrelliert werden können.

Zur Auffindung der Adreß- und der Abnutzungsdaten ist ein Ankerblock vorgesehen, der im physikalisch-adreßmäßig ersten brauchbaren Speicherblock eingerichtet wird und anhand einer darin gespeicherten Erkennungszahl aufzufinden ist. In diesem Ankerblock werden ein Zeiger zum Programmcode und eine Tabelle mit den Zeigern zu den weiteren Block- oder ggf. Sektorzeigern, wenn die Blöcke in Sektoren geteilt sind, sowie zu deren Duplikaten, die zur Sicherheit angelegt werden, untergebracht.

Die Block- bzw. Sektoradreßzeiger werden in hierfür vorgesehenen Speicherblöcken gehalten. Diese Block- bzw. Sektorzeiger werden in der Folge ihrer eigenen logischen Adressen dort in Form einer Zeigertabelle abgespeichert. Adreßmäßig gleichlaufend dazu werden in einem anderen Sektor des gleichen Blocks die zugehörigen Löschnutzklassen-Eintragungen vorgenommen. Ein Duplikat des gesamten Blockes dient der Sicherheit und gibt die Möglichkeit zu einer Rekonstruktion eines unvollständigen Inhalts, der u.U. dann auftreten kann, wenn gerade während einer Neubelegung ein Stromausfall auftritt.

Die Zusammenfassung von mehreren, z.B. 16 Sektoren, z.B. á 512 Byte, zu einem insgesamt zu löschenden Block hält den Speicheraufwand für die Zeigertabellen in engen Grenzen, so daß etwa 99,8% der funktionierenden Blöcke nutzbar ist.

Gewöhnlich besteht ein Speicher aus zahlreichen Speicherbausteinen, die wiederum zahlreiche Blöcke enthalten. Der Blockzeiger besteht daher aus einem Chipadreßteil und einem Blockadreßteil, die miteinander kombiniert abgespeichert sind. Diese Adressen sind zweckmäßig als elementweise mit Zweierpotenzen bewertete Binärzahlen gespeichert. Beispielsweise sind 256 Blockadressen nacheinander in einem Sektor der Adreßzeigertabelle gespeichert und vier solche Sektoren für insgesamt 1024 Blockadressen aneinandergereiht

Die Nutzerdaten sind vorteilhaft innerhalb der Blöcke in Sektoren und in diesen in Datenstrings aufgeteilt. Diese Sektoren haben bevorzugt eine Länge von 512 Byte zuzüglich einiger Reservebytes für Prüfbytes zur Fehlererkennung und Fehlerkorrektur sowie den Modulozähler für die Löschvorgänge. Jeder Datenstring kann unterschiedlich lang sein und enthält gewöhnlich zwischen 100 und 200 Bytes, an die jeweils vier Prüfbytes angehängt sind, so daß zwei bis vier der Strings in einem Block Platz finden.

Wenn Sektoren gelöscht sind, sind die Prüfsyndrome, z.B.

Reed Solomon Codes, ungültig. Die Prüfschaltung meldet einen entsprechenden Zustand zur weiteren Auswertung. Bei einem Neuschreiben anderer Sektoren dieses Blockes dürfen gelöschte aber nicht mit neuem Inhalt zu versehende Sektoren nicht beschrieben werden; sie müssen vielmehr vom Beschreiben ausgenommen werden, um die spätere Erzeugung von Korrektursyndromen zu ermöglichen.

Die Aufteilung des Speichers in gemeinsam zu löschende Blöcke, z.B. zu 8 kByte, hat den Vorteil, daß die Verwaltungsarbeit effektiver ist als bei einer Behandlung einzelner Sektoren des Blockes und daß der Bedarf an Verwaltungsspeicher recht gering bleibt; er beträgt ca. 0,2% . Der dazu benötigte Blockzeiger umfaßt einen Chipanwahlteil und einen Blockadreßteil für das jeweilige Chip intern.

Bei der Übersetzung einer logischen Blockadresse in eine physikalische Blockadresse wird mit einem ersten logischen Adreßteil die Tabelle im Ankerblock angewählt, mit deren Inhalt der zugehörige Zeigertabellenblock angesteuert wird, wobei ein zweiter logischer Adreßteil den zugehörigen Sektor der Adreßzeigertabelle auswählt und ein dritter logischer Adreßteil den zugehörigen Adreßzeiger aus dem Sektor bereitstellt, dem die Adresse des Nutzspeicherblockes mit ihrem Chip- und Blocknummernanteil entnommen wird.

Vorteilhaft wird mindestens der letzt genutzte Sektor der Adreßzeigertabelle und der Ankerblock im Verwaltungsspeicher des Computers aufgehoben, so daß dann, wenn eine fortlaufende Adressierung erfolgt, jeweils bei nachfolgenden Speicheraufrufen sogleich der nächste Adreßzeiger aus dem Sektor genutzt werden kann, solange bis das Sektorende erreicht ist.

Vorteilhaft sind die Untergliederungen der Adreßzeigertabellen-Blöcke jeweils in solche Anzahlen von Untereinheiten vorgesehen, die Zweierpotenzen entsprechen; dadurch können die einzelnen Bitgruppen aus einer insgesamt binär aufgebauten logischen Adresse unmittelbar zur Adressierung genutzt werden. Beispielsweise vier Bit wählen den Sektor im Block und acht Bit den Adreßzeiger im Sektor aus. Weitere Bits dienen der Zeigerblockauswahl über die Tabelle im Ankerblock.

Zum Ausgleichen der Abnutzung der einzelnen Nutzerblöcke wird in jedem Sektor ein Modulo-Zähler, z.B. 2 Byte groß, geführt, dessen Inhalt nach jedem Löschvorgang um eine Eins erhöht wird. Beim Neuschreiben eines Blockes nach einem Löschen im Rahmen des Datenaustauschs zwischen unterschiedlich häufig genutzten Blöcken werden jeweils sektorweise die Daten in Strings gegliedert und jeweils mit dem generierten ECC-Code, dem redundanten Fehlerkorrekturcode, abgespeichert und dazu der Modulo-Zählerstand dort notiert. Alle Sektoren eines Blocks haben den gleichen Modulo-Zählerstand, was als Redundanz bei Widersprüchen beim späteren Lesen zur Restauration genutzt wird. Das Kontrollieren erfolgt jeweils, wenn ein Modulodurchgang abgeschlossen ist, also wenn ein Zählerinhalt Null auftritt.

Wenn beispielsweise bei einer Modulo 2¹⁶-Zählung, also im Falle daß der Zähler zwei Byte umfaßt, ein Durchlauf komplett ist, wird im Anhang an die Adreßzeigertabelle die Löschnutzklassen-Tabelle aufgerufen und in dem zugehörigen Tabellensektor die Löschnutzklasse für den Block um eins erhöht. Die neu errechnete Löschnutzklasse, die vorzugsweise als eine Binärzahl in einem Byte gespeichert ist, wird in die Löschnutztabelle eingetragen. Sie wird dann daraufhin geprüft, ob sie einen Mindestabstand zu der niedrigsten Klasse in der Löschklassentabelle hat. Ggf. erfolgt ein Austausch der Adreßzeiger und der Löschnutzklasse der gefundenen und der aktuellen Eintragung und ein Austausch der Nutzinformationen der zugehörigen Nutz-Speicherblockinhalte mit den Sicherungsmaßnahmen wie zuvor beschrieben.

Auf diese Weise werden die häufig genutzten logischen Adressen wiederholt jeweils solchen physikalischen Blöcken neu zugeordnet, die seltener genutzt waren als der bisher zugeordnete Block. Dadurch wird eine gleichmäßige Abnutzung herbeigeführt.

Die Suchprozedur nach einer niedrigeren oder der niedrigsten Eintragung ist recht schnell und einfach durchzuführen, da die zu vergleichenden Größen vorzugsweise in einem einzigen Byte verschlüsselt vorliegen und sequentiell in den Sektoren gespeichert sind. Aus der beim Suchen gewonnenen Adresse des Ortes, wo die niedrigere oder niedrigste Klasse festgestellt wurde, wird dann die logische Adresse des zugehörigen Blocks abgeleitet.

Die erste Suche nach dem Programmanlauf beginnt vorteilhaft in dem Adreßzeigerblock, in dem der aktuell zu erhöhende Löschnutzklasseneintrag und der aktuelle Adreßzeiger gespeichert sind. Das Ergebnis jedes Suchvorganges wird als Index in der Löschnutzungsklassentabelle festgehalten, und der jeweils nächste Suchvorgang beginnt dann beim nachfolgenden Index. Die Inkrementierungen des Indexes erfolgt modulo der Gesamtanzahl vorhandener Blöcke. Die Zahl der Löschungen der Adreßzeigertabellenblöcke liegt weit unter der Zahl der maximalen zulässigen

Löschungen, was sich aus dem Produkt der Zahl der Zeiger im Block und der Zahl der vorgesehenen Löschnutzklassen ersehen läßt, das löschzahlmäßig weniger als zweifach erreicht wird.

Im Fall, daß jeweils nach dem am wenigsten abgenutzten Block gesucht wird, wird beim Einschalten des Computers im sogenannten Hochlaufen eine Suchroutine nach dem Eintrag, der die geringste Abnutzung repräsentiert, durchgeführt und dieser Wert im Computerspeicher für die weiteren Suchvorgänge als Vergleichswert vorgehalten. Wird bei einem späteren Suchdurchlauf ein Block mit einer solchen Löschnutz-Klasse nicht mehr gefunden, wird die minimale Abnutzungsklasse erhöht und für weiteres Suchen verwendet. In diesem besonderen Fall findet keine weitere Suche statt, und ein Inhaltstausch mit einem anderen Speicher entfällt. Nur seine Abnutzungsklasseneintragung ist erhöht worden.

Weiterhin wird die Buchführung über die Qualität der Nutz-Speicherblöcke und die Strategie der gleichmäßigen Nutzung derselben vorteilhaft dadurch ergänzt, daß jeweils die Entdeckung eines Lesefehlers in diesen Blöcken bzw. deren Sektoren, der durch eine automatische Fehlerkorrektur vermittels des ECC-Syndroms oder durch erneutes Lesen beseitigt wurde, ebenfalls genutzt wird, die Abnutzungsklasse als Löschnutz-Klasse in die Tabelle einzutragen, wodurch so ein Block nach und nach nur noch recht selten genutzt wird. Alle Blöcke werden somit weitgehend gleichmäßig abgenutzt, und es bedarf keiner Reserveblöcke, und die tatsächliche Nutzbarkeit wird weitgehend für alle Blöcke fast bis zum Lebensende erschöpft.

Das Lebensende eines Speichers kann, wie üblich aus statistischer Erfahrung festgelegt werden, jedoch läßt sich die Grenze der Zahl der Löschvorgänge auch noch im Betrieb nachträglich an die tatsächlichen Verhältnisse anpassen, falls noch keine Abnutzungserscheinungen festgestellt werden, insbesondere, wenn Lesefehler durch die Redundanzhaltung nur selten entdeckt worden sind.

Eine besonders kritische Prozedur ist die Veränderung eines Adreßzeigerblocks, da dabei Fehler entstehen können, insbes. wenn dabei ein Stromausfall auftritt. Deshalb ist jeder Adreßzeigerblock dupliziert im Speicher gehalten und beide Blöcke werden vor einer Änderung verglichen und danach nacheinander auf den gleichen Inhalt gebracht.

Bei einem Hochfahren werden die Originale und Duplikate verglichen, wobei ggf. ein vor dem Abschalten noch nicht komplettierter Block erkannt wird und dann mittels des Duplikats auf den gleichen Stand gebracht wird.

Ist der Originalblock bereits neu beschrieben, das Duplikat im Abschaltmoment noch nicht gelöscht, so erkennt man den neueren Stand an der höheren Abnutzungsklassen-Eintragung und gewinnt damit auch den Hinweis auf die korrespodierende neuere Adreßzeigereintragung. Demgemäß ist das Duplikat zu erneuern und der Austausch der Nutz-Speicherblickinhalte vorzunehmen.

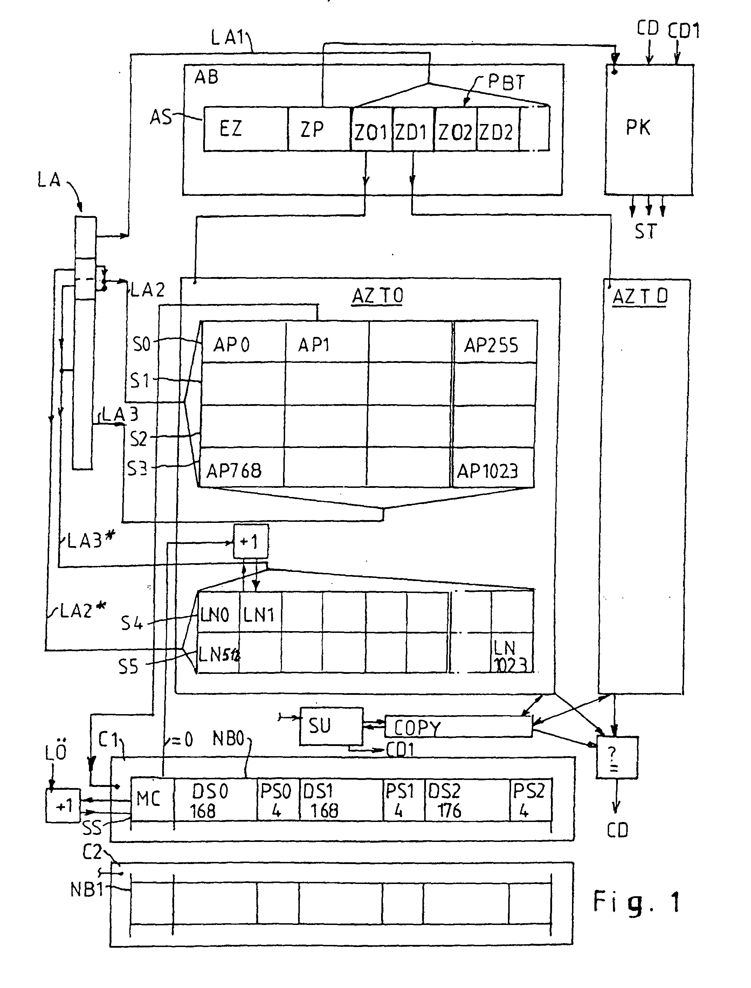

### Figur 1 zeigt ein Blockschema der Speicherstrukturierung und der Zugriffswege.

Der erste nutzbare Block im ersten Speicherbaustein des Speichers ist der Ankerblock AB. Dieser enthält in einem Ankersektor AS eine Erkennungszahl EZ, eine Zeiger ZP zum Programmcode PK und eine Tabelle PBT, die jeweils paarweise Zeiger ZO1, ZD1, ZO2, ZD2 zum Original und zum Duplikat der Adreßzeigertabellen AZTO, AZTD usw. enthalten.

Die Adreßzeigertabellen AZTO, AZTD enthalten Sektoren S0 - S3, in denen die Adreßzeiger AP0, AP1 - AP1023 aneinandergereiht gespeichert sind.

Weiterhin sind in den Sektoren S4, S5 die Löschnutzklassen LN0, LN1 - LN1023 in kompakter Form aneinandergereiht in gleicher Reihenfolge wie die Adreßzeiger AP0, AP1 ... gespeichert.

Die Adreßzeiger AP0, AP1 .... zeigen jeweils auf einen Speicherchip C1, C2 und darin einen Nutzspeicherblock NB0, NB1, wobei die Ziffern des Referenzzeichens die logische Blockadresse bezeichnen, die im Speicher aufgrund der Benutzungshistorie verteilt liegen.

Einer der Nutzspeicherblöcke NB0 ist mit seiner inneren Sektorstruktur gezeigt; es gibt 16 Sektoren, von denen einer als Sektor SS gekennzeichnet ist und mit seinem strukturierten Inhalt aufgefüllt ist.

Jeder der Sektoren SS enthält drei Datenstrings DS0 - DS2 von 168 bzw. 176 Bytes Länge, insges. 512 Byte, und dazu jeweils ein Korrektursyndrom PS0 - PS2 von je 4 Byte und einen Modulozählerspeicher MC mit zwei Byte.

Die Adreßtransformation einer binär aufgebauten logischen Adressse LA adressiert mit einem ersten logischen Adreßabschnitt LA1 den Zeigerplatz in der Tabelle PBT im Ankersektor AS.

Der zweite logische Adreßabschnitt LA2 adressiert sie einen der Sektoren S0 - S3 relativ zum Blockanfang.

Der dritte logische Adreßabschnitt LA3 gibt die Lage eines der Adreßzeiger AP0 - AP1023 innerhalb des gewählten Sektors an.

Für den Fall der Anwahl der zugehörigen Löschnutzklassen-Eintragung sind die Aufteilungen des zweiten und dritten logischen Adreßabschnittes etwas anders, indem der zweite Abschnitt LA2* und der dritte Abschnitt LA3* jeweils um ein Bit kürzer bzw. länger sind.

Eine Rücktransformation der Adreßzeigerposition oder der Position der Nutzklassen-Eintragung in der Tabelle AZT0 ist in ungekehrter Richtung ohne weiteres ersichtlich vorzunehmen.

Die Datentransferverbindungen und die Wirkverbindungen für die Auswahlvorgänge sind prinzipiell symbolisch und nur z.T., z.B. für die Chipauswahl, die Blockauswahl und die Sektoranwahl, konkret auf dem jeweiligen Chip oder der Speicherkarte zu realisieren. Auch der +1-Addierer, der mit dem Löschsignal Lö den Inhalt des Modulo-Zählers MC erhöht und der Weg des Modulo-Durchlaufsignales (=0) zur Erhöhung (+1) der Löschnutzklassen-Eintragung im gerade parallel zum Adreßzeiger AP1 ausgewählten Zähler LN1 sind nur beispielhaft und funktional zu verstehen.

Auch die Kopie COPY, die im Computerspeicher abgelegt und mit einem Suchvorgang SU ebenso wie das Original der Adreßzeigertabelle AZTO und das Duplikat AZTD jeweils in einem Vergleicher (?=) verglichen werden, sind abstrakt symbolisiert. Der Suchvorgang SU und die Vergleiche (?=) erzeugen Bedienungssignale CD, CD1, die mit dem Programmteil PK verarbeitet werden und entsprechende Steuersignale ST erzeugen.

## Patentansprüche

1. Verfahren zur Zugriffssteuerung in einem Computer eines blockweise beschränkt oft löschbaren Speichers, der einem Nutzerzugriff verfügbare Nutzspeicherblöcke (NB0, NB1) enthält, mittels einer Adreßtransformation,
**dadurch gekennzeichnet, daß** die Adreßtransformation über eine Zeigertabelle (AZTO) erfolgt und jedem Adreßzeiger (APO, - AP1023) zugeordnet eine Löschnutzklasse (LN0, - LN1023) tabellarisch gehalten wird, die jeweils bei Erreichen eines vorgegebenen Löschzustandskriteriums erhöht wird, wonach in der Zeigertabelle (AZTO) die weiteren Löschnutzklassen-Eintragungen (LN0, - LN1023...) nach der niedrigsten Löschnutzklasse mit einem Mindestabstand zur aktuellen Löschnutzklasse durchsucht werden, und wenn eine solche Löschnutzklasse gefunden wird, der zugehörige Adreßzeiger (AP0, - AP1023...) und die Löschnutzklasse mit den in der Ausgangszeigerposition (AP1) vertauscht werden und die jeweils diesen Adreßzeigern zugehörigen Nutzspeicher-Blockinhalte ebenfalls getauscht werden.

2. Verfahren nach Anspruch 1, **dadurch gekennzeichnet, daß** das Löschzustandskriterium gebildet wird, indem in jedem Nutz-Speicherblock (NB0) außer Nutzdatenbytes (DS0, - DS2) und Prüfbytes (PS0, - PS2) ein Modulo-Löschvorgangszähler (MC), dessen Inhalt bei jedem Löschvorgang (LÖ) aktualisiert wird, geführt wird und das Löschzustandskriterium bei jedem vollständigen Modulo-Durchlauf als erreicht gilt.

3. Verfahren nach einem der vorstehenden Ansprüche, **dadurch gekennzeichnet, daß** die Schreib- und/oder die Löschzeit alterungsgemäß bestimmt wird und diese als das Löschzustandskriterium gewertet wird/werden und demgemäß die tabellarisch gehaltene Löschnutzklassen-Eintragung (LN0, - LN1023..) erfolgt.

4. Verfahren nach Anspruch 3, **dadurch gekennzeichnet, daß** nach jedem Schreibvorgang und/oder nach jedem Löschvorgang eines Nutz-Speicherblockes (NR0, - NR1) die Vollständigkeit des Vorganges überprüft wird und erforderlichenfalls der jeweilige Vorgang mit einer jeweils längeren Schreibzeit oder Löschzeit wiederholt wird, die dann als das Löschzustandskriterium gewertet wird.

5. Verfahren nach einem der Ansprüche 3 bis 4, **dadurch gekennzeichnet, daß** die jeweilige Schreib- oder Löschzeit mit einem Zeitzähler ermittelt wird und der jeweilige Zählerendstand als das Löschzustandskriterium gewertet wird.

6. Verfahren nach einem der vorstehenden Ansprüche, **dadurch gekennzeichnet, daß** in jedem Nutz-Speicherblock (NB0, - BN1) Nutzdatenbytes (DS0, - DS2) und Prüfbytes (PS0, - PS2) für eine Lesefehlerkorrektur gespeichert werden und jeweils dann, wenn beim Lesen eines Nutz-Speicherblockes (BN0, - BN1) ein durch die Prüfbytes (PS0, - PS2) rekonstruierbarer Fehlerfall festgestellt wurde, dies als ein Löschzustandskriterium gewertet wird und demgemäß die dem betreffenden Nutz-Speicherblock (BN0, -BN1) zugehörigen tabellarisch gehaltenen Löschnutzklassen-Eintragung (LN0, - LN1023..) um eine vorgegebene Klassenanzahl erhöht wird.

7. Verfahren nach einem der vorstehenden Ansprüche, **dadurch gekennzeichnet, daß** die Adreßzeiger (AP0,- AP1023) in der Zeigertabelle (AZTO) in mindestens einem in Sektoren (S0, - S5) gegliederten Speicherblock sequentiell, den jeweiligen Sektoren (S0, - S3) zugeordnet, gegliedert abgelegt werden, und die jeweils den Sektoradreßzeigern zugehörigen Löschnutzklassen-Eintragungen LN0, - LN1023) in der entsprechenden Sequenzanordnung in anderen Sektoren (S4, S5) des gleichen Speicherblocks abgespeichert werden.

8. Verfahren nach einem der vorstehenden Ansprüche, **dadurch gekennzeichnet, daß** die Zeigertabelle (AZTO) in zweifacher Ausführung gespeichert gehalten wird und dann, wenn ein Lesefehler ermittelt wird, eine Inhaltsrekonstruktion mit dem Duplikat (AZTD) vorgenommen wird.

9. Verfahren nach einem der vorstehenden Ansprüche, **dadurch gekennzeichnet, daß** jeder Nutz-Speicherblock (NB0, NB1) in mehrere Sektoren (SS) gegliedert wird, und die Zeigertabelle (AP0, - AP1023) blockweise und sektorweise untergliedert wird und jedem Sektor (SS) eines Nutz-Speicherblocks (NB0, NB1) jeweils ein mit allen blockzugehörigen Sektoren quasi parallel weiterzuzählender Modulo-Löschvorgangszähler (MC) zugeordnet wird und deren Quasigleichlauf von Zeit zu Zeit überprüft wird und jeweils bei einer Abweichung eines Zählerinhalts dieser gemäß dem redundanten Inhalt der anderen Zähler (MC) wiederhergestellt wird.

10. Verfahren nach einem der vorstehenden Ansprüche, **dadurch gekennzeichnet, daß** jeweils in einer Einschalt-Programmroutine in den Zeigertabellen (AZTO, AZTD, COPY) die Löschnutzklassen-Eintragungen (LN0, - LN1023) nach einer aktuell niedrigsten durchsucht werden und in einem internen Speicher des Computers diese aktuell niedrigste abgespeichert wird und daß nach jedem weiteren Suchvorgang dieser Speicher mit dem aktuellen niedrigsten Wert aktualisiert wird.

11. Verfahren nach einem der vorstehenden Ansprüche, **dadurch gekennzeichnet, daß** die nach dem Anlauf erstmalige Durchsuchung der Löschnutzklassen-Eintragungen (LN0, - LN1023) in der Zeigertabelle (AZTO, COPY) in dem Speicherblock beginnt, in dem der aktuelle Adreßzeiger (AP0, - AP1023) gehalten ist, und daß das Ergebnis jedes Suchvorgangs als Index in der Löschnutzungsklassentabelle festgehalten wird.

12. Verfahren nach Anspruch 11, **dadurch gekennzeichnet, daß** die nachfolgenden Suchvorgänge in der Löschnutzklassentabelle jeweils beim modulo nächsten Index beginnen und die Inkrementierung des Index modulo der Gesamtzahl vorhandener Blöcke erfolgt.

13. Verfahren nach einem der vorstehenden Ansprüche, **dadurch gekennzeichnet, daß** jeder Nutz-Speicherblock (NB0, NB1) in 16 Sektoren (SS) zu je 512 Byte aufgeteilt wird und in diese ein oder mehrere Nutzdatenstrings (DS0, DS1, DS2) mit den jeweils daran angeschlossenen Prüfbytes (PS0 - PS2) sowie der Modulo-Löschvorgangszähler (MC) eingespeichert werden.

14. Verfahren nach einem der vorstehenden Ansprüche, **dadurch gekennzeichnet, daß** der Nutz-Speicher aus mehreren Speicherbausteinen (C1, C2) besteht und als Adreßzeiger (AP0, - AP1023) eine Speicherbausteinnummer (C1, C2) und eine bausteinintern geltende Blocknummer (NB0, NB1) kombiniert abgespeichert werden.

15. Verfahren nach einem der vorstehenden Ansprüche, **dadurch gekennzeichnet, daß** im ersten nutzbaren Speicherblock ein Ankerblock (AB) eingerichtet wird, in dem eine Erkennungszahl (EZ) eingeschrieben wird, nach der bei jedem Hochfahrvorgang gesucht wird, und ein Zeiger (ZP) zu einem Programm (PK) zur Durchführung dieses Verfahrens gespeichert wird und eine Tabelle (PBT), deren Inhalte die Lage der Original-Zeigertabellen (ZO1, ZO2) und der Zeigertabellen-Duplikate (ZD1, ZD2) angeben, gespeichert wird.

16. Verfahren nach Anspruch 15, **dadurch gekennzeichnet, daß** die Tabelle (PBT) aus dem Ankerblock (AB) in den internen Speicher des Computers kopiert und dort parallel gehalten wird.

17. Verfahren nach einem der vorstehenden Ansprüche, **dadurch gekennzeichnet, daß** mindestens der zuletzt benutzten Sektor (S0, - S5) der Zeigertabelle (AZTO), in einem internen Verwaltungsspeicher zusätzlich als eine Kopie (CO-PY) gehalten wird und dort programmäßig bearbeitet wird.

## Claims

1. Method for controlling the access, in a computer, to a memory having an erasure frequency that is limited blockwise, said memory containing utility memory blocks (NB0, NB1) available for access by a user, by means of an address conversion, **characterised in that** the address conversion takes place via a pointer panel (AZTO) and an erasure utility category (LN0, LN1023) is maintained in the form of a table in association with each address pointer (AP0, - AP1023), said erasure utility category being increased each time a predetermined erasure-state criterion is reached according to which the other entries in the erasure utility categories (LN0, - LN1023...) are searched in the pointer panel (AZTO) to find the lowest erasure utility category located a minimum distance from the current erasure utility category, and if such an erasure utility category is found, the corresponding address pointer (AP0, - AP1023...) is then permuted with the erasure utility category located at the base pointer position (AP1) and the contents of the utility memory blocks corresponding to each of these address pointers are likewise permuted.

2. Method according to claim 1, **characterised in that** the erasure state criterion is formed by running in each utility memory block (NB0), apart from utility data bytes (DS0, - DS2) and check bytes (PS0, - PS2), a modulo erasure operation counter (MC) the content of which is updated with each erasure operation (LÖ), and the erasure state criterion is deemed to have been met with each complete modulo pass.

3. Method according to either one of the preceding claims, **characterised in that** the writing and/or erasure time is determined in accordance with ageing and is/are rated as the erasure state criterion and the erasure utility category entry (LN0, - LN1023...) maintained in the form of a table takes place accordingly.

4. Method according to claim 3, **characterised in that** after each writing operation to and/or after each erasing operation from a utility memory block (NR0, - NR1), the completeness of the operation is checked and if necessary the respective operation is repeated with a longer writing time or erasure time, which is then rated as the erasure state criterion.

5. Method according to either one of claims 3 and 4, **characterised in that** the respective writing or erasure time is ascertained by a time counter and the respective final counter reading is rated as the erasure state criterion.

6. Method according to any of the preceding claims, **characterised in that** utility data bytes (DS0, - DS2) and check bytes (PS0, - PS2) for a reading error correction are stored in each utility memory block (NB0, - BN1), and whenever upon reading a utility memory block (BN0, - BN1), an error scenario is found that can be reconstructed by the check bytes (PS0, - PS2), this is rated as an erasure state criterion and accordingly the entry from the erasure utility categories (LN0, - LN1023...) being maintained in table form in association with the relevant utility memory block (BN0, - BN1) is increased by a predetermined number of categories.

7. Method according to any of the preceding claims, **characterised in that** the address pointers (AP0, - AP1023) in the pointer panel (AZTO) are worked through in at least one memory block arranged in sectors (S0, - S5) in a sequential manner in association with the respective sectors (S0, - S3), and the erasure utility category entries (LN0, - LN1023) associated in each case with the sector address pointers are stored away in the corresponding sequence arrangement in other sectors (S4, S5) of the same memory block.

8. Method according to any of the preceding claims, **characterised in that** the pointer panel (AZTO) is kept stored in duplicate and whenever a reading error is discovered a reconstruction of the content is carried out using the duplicate (AZTD).

9. Method according to any of the preceding claims, **characterised in that** each utility memory block (NBO, - NB1) is arranged into multiple sectors (SS), and the pointer panel (AP0, - AP1023) is sub-divided blockwise and sectorwise and a modulo erasure operation counter (MC) that will go on being counted in quasi-parallel fashion with all the sectors belonging to the block is assigned to each sector (SS) of a utility memory block (NB0, NB1), and from time to time its quasi-synchronisation is checked and whenever there is a deviation from a counter's content the latter is reinstated in accordance with the redundant content of the other counters (MC).

10. Method according to any of the preceding claims, **characterised in that** in each case a switching-on program routine the erasure utility category entries (LN0, - LN1023) are searched in the pointer panels (AZTO, AZTD, COPY) for a currently lowest entry and this currently lowest entry is stored away in an internal memory of the computer, and that after each further search operation said computer is updated with the current lowest value.

11. Method according to any of the preceding claims, **characterised in that** the initial search, after start-up, of the erasure utility category entries (LN0, - LN1023) in the pointer panel (AZTO, COPY) commences in the memory block in which the current address pointer (AP0, - AP1023) is maintained, and that the result of each search operation is kept as an index in the table of erasure utility categories.

12. Method according to claim 11, **characterised in that** the subsequent search operations in the table of erasure utility categories in each case commence at the modulo following index and the incrementation of the index takes place modulo the total number of blocks present.

13. Method according to any of the preceding claims, **characterised in that** each utility memory block (NB0, - NB1) is divided into 16 sectors (SS) of 512 bytes in each case and one or more utility data strings (DS0, DS1, DS2) with the check bytes (PS0 - PS) respectively attached thereto are stored therein, along with the modulo erasure operation counter (MC).

14. Method according to any of the preceding claims, **characterised in that** the utility memory comprises a plurality of memory modules (C1, C2), and a memory module number (C1, C2) and a block number (NB0, NB1) valid within the module are stored away in combination as the address pointers (AP0, - AP1023).

15. Method according to any of the preceding claims, **characterised in that** in the first usable memory block an anchor block (AB) is set up in which is recorded a recognition number (EZ) which is used to search upon each incrementing operation, and a pointer (ZP) is stored to a program (PK) for carrying out said method, and a panel (PBT) is stored, the contents of which indicate the position of the original pointer panels (ZO1, ZO2) and of the pointer panel duplicates (ZD1, ZD2).

16. Method according to claim 15, **characterised in that** the panel (PBT) is copied from the anchor block (AB) into the internal memory of the computer and there kept in parallel.

17. Method according to any of the preceding claims, **characterised in that** at least the last used sector (S0, - S5) of the pointer panel (AZTO) is additionally kept as a copy (COPY) in an internal housekeeping memory and there processed in program terms.

## Revendications

1. Procédé pour la commande d'accès dans un ordinateur à une mémoire à nombre d'effacements par blocs limité, qui comprend des blocs de mémoire utile (NB0, NB1) disponibles pour un accès par l'utilisateur, à l'aide d'une transformation d'adresse,
**caractérisé en ce que**
la transformation d'adresse s'effectue par l'intermédiaire d'une table d'index (AZTO), et qu'un indice de nombre d'effacement (LN0, - LN1023), associé à chaque pointeur d'adresse (AP0, AP1023), est conservé sous forme de table, lequel est augmenté chaque fois qu'un critère d'état d'effacement prédéterminé est atteint, ce après quoi, on recherche dans la table d'index (AZT0), les autres entrées d'indices de nombre d'effacement (LN0, - LN1023) venant après l'indice de nombre d'effacement le plus bas, avec un intervalle minimal par rapport à l'indice de nombre d'effacement actuel et, lorsqu'un tel indice est découvert, le pointeur d'adresse (AP0, - AP1023...) et l'indice de nombre d'effacement sont substitués aux valeurs initiales (AP1), et les contenus des blocs de mémoire utile, associés à ces pointeurs d'adresses, sont également remplacés.

2. Procédé selon la revendication 1, **caractérisé en ce que** le critère d'état d'effacement est formé **en ce que**, dans chaque bloc de mémoire utile (NB0), en dehors de bytes de données utiles (DS0, - DS2) et bytes de contrôle (PS0, - PS2), on gère un compteur de processus d'effacement modulo (MC), dont le contenu est actualisé lors de chaque processus d'effacement (Lö), et **en ce que** le critère d'état d'effacement est considéré comme atteint lors de chaque passe modulo complète.

3. Procédé selon l'une des revendications précédentes, **caractérisé en ce que** le temps d'écriture et / ou le temps d'effacement est / sont déterminé/s en fonction du vieillissement et est / sont interprété/s comme critère d'état d'effacement et l'entrée d'indices de nombre d'effacement (LN0, - LN1023..) est conformément effectuée, sous forme de table.

4. Procédé selon la revendication 3, **caractérisé en ce qu'**après chaque processus d'écriture et / ou après chaque processus d'effacement d'un bloc de mémoire utile (NR0 - NR1), le caractère complet du processus est contrôlé et, si nécessaire, le processus en question est réitéré avec un temps d'écriture ou un temps d'effacement plus long qui est ensuite pris comme critère d'état d'effacement.

5. Procédé selon l'une des revendications 3 à 4, **caractérisé en ce que** chaque temps d'écriture ou d'effacement est déterminé à l'aide d'un compteur de temps et chaque état de fin de comptage est pris comme critère d'état d'effacement.

6. Procédé selon l'une des revendications précédentes, **caractérisé en ce que**, dans chaque bloc de mémoire utile (NB0, - BN1), des bytes de données utiles (DS0, - DS2) et des bytes de contrôle (PS0, - PS2) sont mémorisés pour une correction d'erreurs de lecture et, chaque fois qu'un cas d'erreur, pouvant être reconstruit par les bytes de contrôle (PS0, - PS2), est constaté, lors de la lecture d'un bloc de mémoire utile (BN0, - BN1), ceci est pris comme critère d'état d'effacement, et l'entrée d'indices de nombre d'effacement associée, conservés, sous forme de tables, est adéquatement augmentée d'un nombre d'indices prédéterminé.

7. Procédé selon l'une des revendications précédentes, **caractérisé en ce que** les pointeurs d'adresse (AP0, - AP1023), dans la table de pointeurs (AZTO), sont classés séparément dans au moins un bloc de mémoire divisé en secteurs (S0, - S5), séquentiellement, en étant associés aux secteurs respectifs (S0, - S3), et les entrées d'indices de nombre d'effacements (LN0, LN1023), respectivement associés aux pointeurs d'adresses des secteurs, sont mémorisées dans l'ordre séquentiel correspondant, dans d'autres secteurs (S4, S5) du même bloc de mémoire.

8. Procédé selon l'une des revendications précédentes, **caractérisé en ce que** la table de pointeurs (AZTO) est mémorisée en deux exemplaires et qu'une reconstruction du contenu est ensuite effectuée avec le duplicata (AZTOD), lorsqu'une erreur de lecture a été détectée.

9. Procédé selon l'une des revendications précédentes, **caractérisé en ce que** chaque bloc de mémoire utile (NB0, NB1) est divisé en plusieurs secteurs (SS) et la table de pointeurs (AP0, - AP1023) est sous-divisée en blocs et en secteurs, et **en ce qu'**à chaque secteur (SS) d'un bloc de mémoire utile (NB0, NB1) est associé un compteur de processus d'effacement modulo (MC) qui assure un comptage en parallèle pour tous les secteurs associés au bloc, leur quasi-synchronisme étant contrôlé de temps en temps, et que, lors de chaque divergence d'un contenu de compteur, celui-ci est régénéré conformément au contenu redondant des autres compteurs (MC).

10. Procédé selon l'une des revendications précédentes, **caractérisé en ce que** dans chaque routine de programme de connexion dans la table de pointeurs (AZTO, ATZTD, COPY), on recherche dans les entrées d'indices de nombre d'effacements (LN0, - LN1023) celle qui est actuellement la plus basse et mémorise celle-ci dans une mémoire interne de l'ordinateur, et qu'après chaque autre recherche, cette mémoire est actualisée avec la valeur actuelle, la plus basse.

11. Procédé selon l'une des revendications précédentes, **caractérisé en ce que** la première recherche des entrées d'indices de nombre d'effacement (LN0, - LN1023) dans la table de pointeurs AZTO, COPY), commence dans le bloc de mémoire dans lequel le pointeur d'adresse actuel (AP0, - AP1023) est conservé, et que le résultat de chaque recherche est retenu, en tant qu'index, dans la table d'indices de nombre d'effacements.

12. Procédé selon la revendication 11, **caractérisé en ce que** chacune des recherches suivantes dans la table d'indices de nombre d'effacements commence au modulo de l'index suivant et que ledit modulo d'index est incrémenté du nombre total des blocs existants.

13. Procédé selon l'une des revendications précédentes, **caractérisé en ce que** chaque bloc de mémoire utile (NB0, NB1) est divisé en 16 secteurs (SS) de 512 bytes chacun et que, dans ceux-ci, une ou plusieurs chaînes de données utiles (DS0, DS1, DS2), avec les bytes de contrôle (PS0 - PS2) y rattachés, ainsi que le compteur d'opérations d'effacement modulo (MC) sont mémorisés.

14. Procédé selon l'une des revendications précédentes, **caractérisé en ce que** la mémoire utile consiste en plusieurs modules de mémoire (C1, C2) et qu'un numéro de module de mémoire (C1, C2) et un numéro de bloc valable au niveau interne (NB0, NB1) sont mémorisés, combinés, en tant que pointeurs d'adresse.

15. Procédé selon l'une des revendications précédentes, **caractérisé en ce que**, dans le premier bloc de mémoire utilisable, est aménagé un bloc d'ancrage (AB) dans lequel un chiffre d'identification (EZ) est inscrit, lequel est recherché lors de chaque opération de démarrage, et un pointeur (ZP) associé à un programme (PK) d'exécution de ce procédé est mémorisé, et une table (PBT), dont les contenus indiquent la position des tables de pointeurs d'origine (ZO1, ZO2) et des copies des tables de pointeurs (ZD1, ZD2), est mémorisée.

16. Procédé selon la revendication 15, **caractérisé en ce que** la table (PBT) en provenance du bloc d'ancrage (AB) est copiée dans la mémoire interne de l'ordinateur et y est conservée parallèlement.

17. Procédé selon l'une des revendications précédentes, **caractérisé en ce qu'**au moins le secteur (S0, - S5) de la table de pointeurs (AZTO) utilisée en dernier lieu est conservé, en plus, en tant que copie (COPY), dans une mémoire de gestion interne et y est traitée conformément au programme.
